**Europäisches Patentamt**

(19) **European Patent Office**

**Office européen des brevets**

(11) Numéro de publication: **0 176 492**

**A1**

# (12) DEMANDE DE BREVET EUROPEEN

(21) Numéro de dépôt: **85870110.5**

(22) Date de dépôt: **09.08.85**

(51) Int. Cl.⁴: **G 01 T 1/115**

(30) Priorité: **13.08.84 LU 85499**

(43) Date de publication de la demande:
**02.04.86 Bulletin 86/14**

(84) Etats contractants désignés:
**BE DE FR GB IT NL**

(71) Demandeur: **L'Etat belge, représenté par le Directeur Général des Services de Programmation de la Politique Scientifique**
**8 rue de la Science**
**B-1040 Bruxelles(BE)**

(72) Inventeur: **Charlet, Jean-Marie**
**Boulevard Albert Elisabeth 34 boîte 4**
**B-7000 Mons(BE)**

(72) Inventeur: **Lair, Philippe**
**rue du Château 1**
**B-7040 Havre(BE)**

(72) Inventeur: **Quinif, Yves**
**rue des Ecaussinnes 87**
**B-7078 Le Roeulx(BE)**

(72) Inventeur: **Blave, Arthur**
**rue du Marais 158**
**B-7071 La Louvière (Houdeng Aimeries)(BE)**

(74) Mandataire: **Vanderperre, Robert et al,**
**Bureau VANDER HAEGHEN 63 Avenue de la Toison d'Or**
**B-1060 Bruxelles(BE)**

(54) **Appareil de mesure de thermoluminescence.**

㊗ L'alimentation de l'élément chauffant est contrôlé et régulé par un circuit comprenant un dispositif de mesure de température (12) pour mesurer la température de l'échantillon à analyser et produire un signal (M) représentant cette température, un générateur de consignes (13) pour produire des signaux de consigne de chauffe (C) successifs pendant tout le cycle de chauffe prédéterminé, un dispositif comparateur (15) connecté pour comparer les signaux de mesure de température (M) aux signaux de consigne de chauffe (C) et pour produire à tout instant un signal de commande de chauffe (F) en fonction de l'écart entre les signaux appliqués à ses entrées, un dispositif générateur de courant de chauffage (17) répondant au signal de commande de chauffe (F) pour engendrer le courant de chauffage pour alimenter l'élément chauffant (11) du dispositif de chauffage afin de porter l'échantillon à la température prédéterminée.

EP 0 176 492 A1

./...

La présente invention concerne un appareil destiné à la mesure de la thermoluminescence d'échantillons de substances minérales, par exemple: roches dures, sédiments meubles, restes archéologiques, produits industriels.

On connaît des appareils pour mesurer des doses de thermoluminescence et l'art antérieur peut être illustré par le brevet des Etats-Unis d'Amérique No. 3.657.535. Cet appareil comprend essentiellement un dispositif de chauffage pour chauffer un dosimètre , un dispositif pour convertir le flux lumineux thermoluminescent en signal électrique et un dispositif pour mesurer le signal électrique et produire un signal de mesure proportionnel à l'intensité lumineuse thermoluminescente. Un chronomètre réglable permet de varier la température produite par le dispositif de chauffage. Cet appareil connu ne peut être utilisé dans les applications géologiques de la thermoluminescence car il ne permet pas de mesurer de faibles niveaux de thermoluminescence sur de faibles quantités de matière et il ne

permet pas nòn plus de réaliser une régulation programmée et parfaitement reproductible du chauffage.

En effet, pour appliquer la mesure de la thermoluminescence aux sondages géologiques ou aux investigations
archéologiques par exemple, il est nécessaire de
pouvoir travailler sur de faibles quantités de matière
et de disposer d'un appareil de mesure ayant une sensibilité et une résolution élevées et qui soit capable
d'effectuer des mesures parfaitement reproductibles
de manière à fournir des résultats de mesure significatifs et strictement comparables qui permettent de
procéder à des analyses fines et méthodiques.

Ce problème est résolu selon l'invention par un appareil
de mesure de thermoluminescence comprenant un circuit
de commande de chauffe organisé pour contrôler et
réguler la température de l'échantillon à analyser
suivant un programme de chauffe prédéterminé, ledit
circuit de commande de chauffe comprenant un dispositif
de mesure de température pour mesurer la température de
l'échantillon à analyser et produire un signal représentant cette température, un générateur de consigne pour
produire des signaux de consigne de chauffe successifs
pendant tout le cycle de chauffe prédéterminé, un dispositif comparateur connecté pour comparer les signaux
de mesure de température aux signaux de consigne de
chauffe et pour produire à tout instant un signal de
commande de chauffe en fonction de l'écart entre les
signaux appliqués à ses entrées, un dispositif générateur de courant de chauffage répondant au signal de
commande de chauffe pour engendrer le courant de
chauffage pour alimenter l'élément chauffant du dispositif de chauffage afin de porter l'échantillon à
la température prédéterminée.

3

0176492

le flux lumineux thermoluminescent produit par l'échantillon chauffé est collecté par un dispositif optique ayant une excellente transparence jusqu'aux proches ultra-violets et concentré sur la photocathode d'un photomultiplicateur/diviseur de tension agencé pour produire un train d'impulsions dont le nombre est proportionnel au nombre de photons captés et les impulsions sélectionnées par un discriminateur sont comptées dans un compteur d'impulsions en réponse à des ordres d'échantillonnage. Un microprocesseur commande le programme de chauffe et l'acquisition des données de thermoluminescence pendant le cycle de mesure. Il peut également contenir les logiciels nécessaires pour le traitement des données de mesure et éventuellement leur archivage.

L'appareil selon l'invention se caractérise par une sensibilité et une stabilité élevées qui lui permet d'effectuer des mesures de thermoluminescence de faible niveau avec une résolution suffisante pour permettre de discriminer des pics de thermoluminescence voisins, et qui lui permet de fournir des résultats de mesure parfaitement reproductibles même pour des investigations sur un site géologique prospecté.

La conception de l'appareil permet une automisation complète de la mesure, le traitement informatique des données de thermoluminescence et l'archivage des résultats d'analyse.

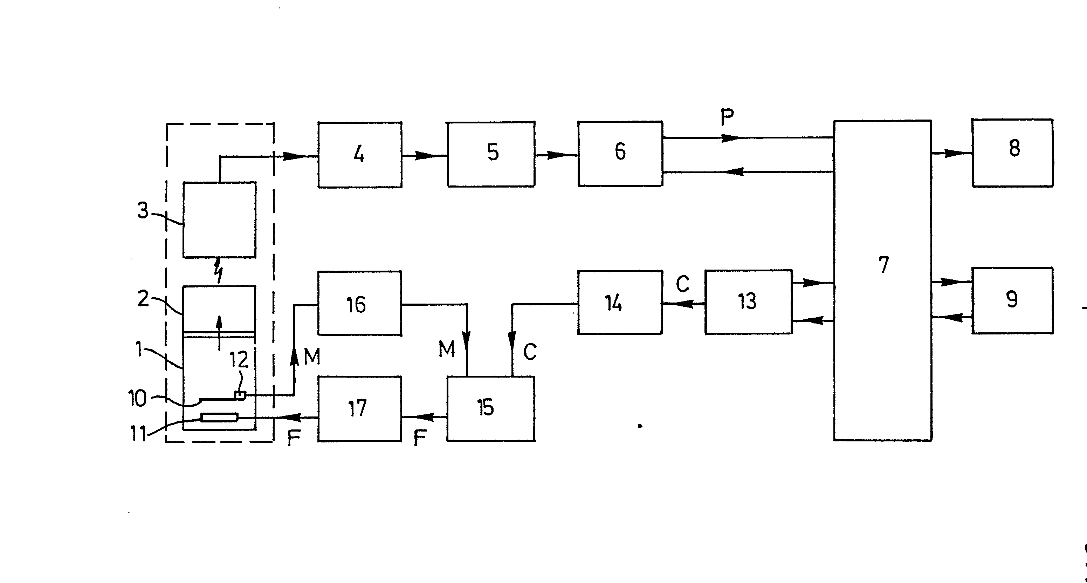

L'invention est exposée dans ce qui suit avec référence au dessin ci-annexé qui est un schéma synoptique d'un appareil selon l'invention.

L'appareil selon l'invention comprend un four miniature 1 contenant un porte-échantillon 10 destiné à recevoir une faible quantité d'échantillon à mesurer, par exemple 0,1 à 0,01 gramme, et un dispositif de chauffage 11 pour chauffer l'échantillon à analyser. Sur le porte-échantillon est fixé un dispositif de mesure de température 12 prévu pour engendrer un signal M représentant la température mesurée. Ce signal de mesure de température M est utilisé dans un circuit de commande de chauffe que l'on décrira plus loin.

Au-dessus du four 1 est disposé un dispositif optique 2 pour collecter l'émission lumineuse thermoluminescente de l'échantillon soumis au chauffage dans le four 1. Le dispositif optique comporte des lentilles choisies (par exemple en fluorine) pour offrir une excellente transparence jusqu'aux ultra-violets proches car c'est dans cette zone du spectre que se situe la majorité des émissions de thermoluminescence des minéraux couramment étudiés (quartz, feldspaths, silicates artificiels). Le dispositif optique concentre l'émission lumineuse thermoluminescente sur la photocathode d'un photomultiplicateur/diviseur de tension agencé pour compter les photons et produire un signal de mesure sous forme d'impulsions dont le nombre est proportionnel au nombre de photons captés sur la photocathode. La photocathode est choisie pour avoir une réponse spectrale ayant son maximum dans la radiation bleue. Le comptage des photons assure une bonne sensibilité et une excellente précision. Il est ainsi possible de mesurer de faibles niveaux de thermoluminescence sur de très petites quantités de matière.

Les impulsions du photomultiplicateur/diviseur de tension 3 sont appliquées à un discriminateur 4 (dispositif connu en soi) destiné à éliminer les impulsions ayant une amplitude inférieure à un niveau de seuil prédéterminé de manière à éliminer les impulsions de bruit et améliorer ainsi le rapport signal/bruit tout en sélectionnant les impulsions réellement significatives. Toutes les impulsions d'amplitude supérieure
au niveau de seuil sont donc prises en compte quelle
que soit leur amplitude, ce qui rend le dispositif
très peu sensible aux variations de la haute tension.
Le dispositif présente ainsi une excellente stabilité.
Les impulsions sélectionnées sont reçues dans un amplificateur 5 ayant simplement pour but de porter ces
impulsions à un niveau suffisant pour attaquer un
compteur d'impulsions 6. Celui-ci compte et intègre
les impulsions de mesure sélectionnées sur un intervalle de temps déterminé par un microprocesseur 7.
La sortie du compteur d'impulsions 6 délivre un signal
P qui représente le nombre d'impulsions comptées,
c'est-à-dire le nombre de photons captés. Le discriminateur et l'amplificateur sont choisis avec une large
bande passante pour permettre un comptage rapide
(grande plage dynamique de flux lumineux).

Le microprocesseur 7 commande et contrôle le cycle
complet de mesure suivant un programme préétabli . A
intervalles réguliers, le microprocesseur 7 applique
des signaux d'échantillonnage au compteur d'impulsions
6 qui, en réponse à ces signaux, envoie un signal de
comptage au microprocesseur. Les signaux de comptage
peuvent être stockés dans une mémoire, incorporée ou
non au microprocesseur. Celui-ci commande également le
cycle de chauffe et, à cet effet, il envoie les ordres
de chauffage au circuit de commande de chauffe (ordres
de début et de fin de chauffe, ordre de remise à zéro
du cycle de chauffe).

Le but du circuit de commande de chauffe est de contrôler et réguler automatiquement la puissance de l'élément chauffant 11 du four 1 de manière à faire varier la température de l'échantillon à mesurer suivant un programme de chauffe prédéterminé adapté aux applications spécifiques. A cet effet, le circuit de commande de chauffe comprend un générateur de consignes 13 organisé pour engendrer les signaux de consigne de chauffe selon des critères appropriés tels que la linéarisation de la progression de chauffe en fonction des caractéristiques de l'élément chauffant et du dispositif de mesure de température, la réalisation des lois de variation de chauffe (rampes linéaires, paliers, etc) en fonction des applications spécifiques , la détermination des zones d'intérêt particulier à l'intérieur d'une loi de chauffe.

Le générateur de consignes 13 consiste par exemple en une organisation de logique qui reçoit du microprocesseur les signaux d'ordre du cycle de chauffe. En réponse au signal d'ordre de début de chauffe, le générateur de consignes produit les signaux de consigne de chauffe (C) successifs qui, après conversion sous forme analogique dans un convertisseur numérique/analogique 14, sont appliqués à une entrée d'un comparateur 15. Une seconde entrée du comparateur reçoit le signal de mesure de température M, dûment porté à un niveau suffisant par l'amplificateur de mesure 16. Le comparateur 15 compare chaque fois le signal de mesure avec le signal de consigne de chauffe pour produire un signal de commande F, fonction de l'écart entre les signaux d'entrée, qui détermine et règle la puissance à délivrer à l'élément chauffant 11 pour porter l'échantillon à analyser à une température voulue. Le signal de commande F est appliqué à un amplificateur de puissance 17 qui fournit la puissance nécessaire à l'élément chauffant.

Les consignes de chauffe sont préétablies pour assurer un chauffage continu et progressif correspondant à une loi de chauffe prédéterminée jusqu'à une température donnée. La progression du chauffage peut par exemple être une progression linéaire de 1°C par seconde. Grâce à cette régulation programmée sont assurées une excellente résolution qui permet de discriminer des pics de thermoluminescence voisins ainsi qu'une parfaite reproductibilité des mesures qui permet une analyse comparative significative des résultats de mesure de thermoluminescence.

A la fin du cycle de chauffe, l'ordre de fin de chauffe engendré par le microprocesseur met fin à la progression de chauffe, puis le signal de remise à zéro replace le générateur de consignes et le circuit de commande de chauffe à l'état initial pour un autre cycle de chauffe.

Tout au long du cycle de chauffe, le générateur de consignes 13 envoie au microprocesseur les informations relatives aux diverses zones d'intérêt du cycle de chauffe, c'est-à-dire les diverses plages de température qui correspondent à des événements particuliers sur la courbe de thermoluminescence, par exemple un pic de thermoluminescence remarquable. Ces informations ainsi que les données de mesure produites par le compteur d'impulsions sont traitées par le microprocesseur pour la détermination des paramètres utiles à l'interprétation de la thermoluminescence, par exemple: réduction du bruit de fond par lissage, suppression mathématique de l'émission lumineuse du corps noir, recherche des extrema de la courbe de thermoluminescence, calcul de l'intégrale des pics, etc. Ces résultats sont imprimés sur une imprimante 8 et les données de la mesure de thermoluminescence sont archivées sur disque dans une unité de disques 9. Une interface avec connexion extérieure peut encore être prévue pour raccordement d'une unité périphérique extérieure.

L'appareil peut être aisément réalisé en version de terrain afin d'effectuer des investigations et mesures de thermoluminescence directement sur un site géologique prospecté, et ce avec les mêmes performances et avantages que l'appareil de laboratoire. Dans cette version de terrain, le microprocesseur peut être simplifié et ne comprendre que les moyens organiques et logiciels nécessaires et suffisants pour effectuer les mesures et les enregistrer. Les données de mesure , toujours parfaitement reproductibles et d'une excellente précision grâce aux agencements caractéristiques selon l'invention, peuvent alors être traitées et archivées ultérieurement.

REVENDICATIONS

1. Appareil pour mesurer la thermoluminescence d'un échantillon de substance minérale comprenant un dispositif de chauffage, un dispositif optique pour concentrer l'émission lumineuse thermoluminescente de l'échantillon et un dispositif de mesure de l'intensité lumineuse thermoluminescente de l'échantillon, caractérisé en ce qu'il comprend un circuit de commande de chauffe organisé pour contrôler et réguler la température de l'échantillon à analyser suivant un programme de chauffe prédéterminé ledit circuit de commande de chauffe comprenant un dispositif de mesure de température (12) pour mesurer la température de l'échantillon à analyser et produire un signal (M) représentant cette température, un générateur de consignes (13) pour produire des signaux de consigne de chauffe (C) successifs pendant tout le cycle de chauffe prédéterminé, un dispositif comparateur (15) connecté pour comparer les signaux de mesure de température (M) aux signaux de consigne de chauffe (C) et pour produire à tout instant un signal de commande de chauffe (F) en fonction de l'écart entre les signaux appliqués à ses entrées, un dispositif générateur de courant de chauffage (17) répondant au signal de commande de chauffe (F) pour engendrer le courant de chauffage pour alimenter l'élément chauffant (11) du dispositif de chauffage afin de porter l'échantillon à la température prédéterminée.

2. Appareil selon la revendication 1, caractérisé en ce que le générateur de consignes (13) est une organisation de logique qui répond à des signaux d'ordres d'un microprocesseur (7) et, le cas échéant, qui envoie à celui-ci, des signaux indiquant des zones d'intérêt particulier dans le cycle de chauffe.

0176492

3. Appareil selon la revendication 1, caractérisé en ce que le dispositif de mesure de l'intensité lumineuse thermoluminescente comprend un dispositif photomultiplicateur/diviseur de tension (3) disposé pour être irradié par le flux lumineux thermoluminescent de l'échantillon et engendrer un train d'impulsions dont le nombre est proportionnel au nombre de photons reçus, un discriminateur (4) pour recevoir le signal de sortie du dispositif photomultiplicateur/diviseur de tension (3) et ne laisser passer que les impulsions ayant un niveau supérieur à un seuil prédéterminé, et un compteur d'impulsions (6) connecté pour compter les impulsions sélectionnées par le discriminateur (4) pendant un intervalle de temps prédéterminé et produire un signal de mesure (P) représentant le nombre de photons.

4. Appareil selon la revendication 3, caractérisé en ce que le flux lumineux thermoluminescent de l'échantillon est concentré sur la photocathode du photomultiplicateur/diviseur de tension (3) au moyen d'un dispositif optique (2) comportant des lentilles offrant une excellente transparence jusqu'aux ultra-violets proches.

5. Appareil selon la revendication 3, caractérisé en ce que le signal de mesure (P) est reçu dans un microprocesseur (7) contenant des logiciels pour effectuer le traitement des données de thermoluminescence.

6. Appareil selon la revendication 3, caractérisé en ce que le dispositif de mesure de l'intensité lumineuse thermoluminescente comprend une mémoire pour stocker les signaux de mesure (P).

# 0176492

Office européen des brevets

**RAPPORT DE RECHERCHE EUROPEENNE**

Numero de la demande

EP 85 87 0110

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| D,A | US-A-3 657 535 (BJARNGARD & WEBB)<br>* Résumé; colonne 1, ligne 38 - colonne 4, ligne 68; figures 1,2 * | 1,3 | G 01 T 1/115 |
| | --- | | |
| A | PATENTS ABSTRACTS OF JAPAN, vol. 7, no. 262 (P-238)[1407], 22 novembre 1983, page 88 P 238; & JP - A - 58 144 768 (KASEI OPUTONIKUSU K.K.) 29-08-1983 | 3-6 | |
| | --- | | |
| A | US-A-4 105 918 (MIYAGAWA et al.)<br>* Colonne 2, ligne 54 - colonne 3, ligne 21; figure 3 * | 1 | |
| | --- | | DOMAINES TECHNIQUES RECHERCHES (Int. Cl 4) |
| A | FR-A-1 474 548 (UKAEA)<br>* Page 2, ligne 31 - page 3, ligne 12; figures 1,2 * | 1,3 | G 01 T |
| | ----- | | |

Le présent rapport de recherche a été établi pour toutes les revendications

| Lieu de la recherche<br>LA HAYE | Date d'achèvement de la recherche<br>25-11-1985 | Examinateur<br>DATTA S. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82